# EUROPÄISCHE PATENTSCHRIFT

(11) **EP 3 402 332 B1**
(45) Veröffentlichungstag und Bekanntmachung des Hinweises auf die Patenterteilung: **24.06.2020**
(21) Anmeldenummer: 17700629.3
(22) Anmeldetag: 09.01.2017
(51) Int. Cl.: A01N 33/22, A01N 43/82, A01N 43/40, A01N 25/04, A01N 25/22, A01N 25/30

(54) **WÄSSRIGE DISPERSIONEN ENTHALTEND ACLONIFEN UND FLUFENACET**
AQUEOUS DISPERSIONS COMPRISING ACLONIFEN AND FLUFENACET
DISPERSIONS AQUEUSES COMPRENANT DE L'ACLONIFÈNE ET DU FLUFÉNACET

(30) Priorität: 15.01.2016 EP 16151491
(43) Veröffentlichungstag der Anmeldung: 21.11.2018
(73) Patentinhaber: Bayer CropScience Aktiengesellschaft, 40789 Monheim am Rhein (DE)
(72) Erfinder: KRAUSE, Jens, 51375 Leverkusen (DE); DECKWER, Roland, 65929 Frankfurt (DE)
(74) Vertreter: BIP Patents
(86) Internationale Anmeldenummer: PCT/EP2017/050313
(87) Internationale Veröffentlichungsnummer: WO 2017/121695

(56) Entgegenhaltungen:
- WO-A1-2014/001248
- WO-A1-2014/001357
- WO-A1-2014/001359
- WO-A2-2007/112834

## Beschreibung

Die vorliegende Erfindung betrifft das Gebiet der Pflanzenschutzmittel-formulierungen. Insbesondere betrifft die Erfindung Formulierungen in Form von wässrigen Dispersionen, welche die herbiziden Wirkstoffe Aclonifen und Flufenacet enthalten und nach Austausch von Tristyrolphenolethoxylaten in den Formulierungen lagerstabil sind.

Herbizide Wirkstoffe werden im Allgemeinen nicht in ihrer reinen Form eingesetzt. In Abhängigkeit von dem Anwendungsgebiet und der Anwendungsart, sowie von physikalischen, chemischen und biologischen Parametern werden die Wirkstoffe in Mischung mit üblichen Hilfs- und Zusatzstoffen als Wirkstoffformulierung eingesetzt. Auch die Kombinationen mit weiteren Wirkstoffen zur Erweiterung des Wirkungsspektrums und/oder zum Schutz der Kulturpflanzen (z.B. durch Safener, Antidote) sind bekannt.

Formulierungen von herbiziden Wirkstoffen sollten im Allgemeinen eine hohe chemische und physikalische Stabilität, eine gute Applizierbarkeit und Anwenderfreundlichkeit und eine breite biologische Wirkung mit hoher Selektivität aufweisen.

Wässrige Dispersionen für herbizide Wirkstoffe, zu denen auch wässrige Suspensionskonzentrate (SC) zählen, sind bekannt, u.a. aus EP-A-0514768 (US 5,707,926), EP-A-0592880 (US 5,376,621) oder WO 2007/112834 A2, welche Formulierungen für Flurtamone und Diflufenican-Mischungen offenbart. WO2014/001357 offenbart eine wässrige Zusammensetzung enthaltend Aclonifen, Flufenacet, Tristyrylphenolpolyglycolether und Lignosulfonat-Natriumsalz.

Die herbiziden Wirkstoffe Aclonifen und Flufenacet werden allein und als Mischung (im Tank-Mix), unter anderem als wässrige Suspensionskonzentrate (SC), beispielsweise mit dem Handelsnamen Bandur 600 SC (Aclonifen) und Cadou 508 SC (Flufenacet) verwendet. Daneben können auch noch weitere Mischungspartner hinzugefügt werden, wie zum Beispiel Brodal 500 SC (Diflufenican). Nachteil der diesen oder ähnlichen Produkten zu Grunde liegenden Einzelformulierungen ist oft ihre geringere biologische Aktivität gegenüber sogenannten Co-Formulierungen (syn.: Kombinations-Formulierung, Co-Formulations, Ready-To-Use-Mixtures), bei denen mehrere Wirkstoffe im fixierten Mischungs-Verhältnis in einer Formulierung zusammengefasst werden.

Jedoch müssen bei hochbeladenen Co-Formulierungen mit mehreren Wirkstoffen die Stabilitätsanforderungen jedes einzelnen Wirkstoffs berücksichtigt werden, die je nach Wirkstoff sehr unterschiedlich sein können. In besonderen Fällen können auch Interaktionen beobachtet werden, wie z.B. die Zersetzung eines Wirkstoffs bedingt durch die direkte Anwesenheit eines anderen. Ein besonderes Problem ist auch die Instabilität von Formulierungen während der Lagerung, welche die Haltbarkeitsdauer (shelf-life) reduziert. Lagerinstabilität ist z.B. erkennbar an der Bildung eines Bodensatzes (oft aufgrund von Kristallwachstum eines Wirkstoffs), wodurch nicht nur die biologische Wirksamkeit der Einzelwirkstoffe stark abnimmt, sondern auch deren Verteilung bei der Feld-Applikation uneinheitlich wird. Dies führt u.a. dazu, dass es neben Bereichen mit Über-Dosierung, wo Nutzpflanzen-Schädigung auftritt, auch zu Bereichen mit Unter-Dosierung kommt, wo das unerwünschte Wachstum der Schadpflanzen nicht mehr ausreichend kontrolliert wird. Daneben können Unter-Dosierungen in Folgejahren auch zu wirkstoff-resistenten Schadpflanzen führen. Beispielsweise wäre hier der Ackerfuchsschwanz (Alopecurus myosuroides, ALOMY) zu nennen, dessen schwierige Bekämpfung u.a. im Getreide ein großes Problem darstellt.

Ein spezifischer Nachteil der oben genannten Aclonifen-SC-Formulierungen ist die Tatsache, dass diese Tenside aus der Gruppe der Tristyrolphenolethoxylate (TSP-EO) enthalten, welche eine verzögerte biologische Abbaubarkeit aufweisen. Daneben enthält TSP-EO freies Phenol als unerwünschte Nebenkomponente, welches dazu geführt hat, dass diese Gruppe von Verbindungen mittlerweile in die REACH-Substitutionsliste aufgenommen wurden (Europäische Chemikalienverordnung REACH: Registration, Evaluation, Authorisation and Restriction of Chemicals)
Bei Versuchen SC-Co-Formulierungen für die Wirkstoff-Mischung Aclonifen und Flufenacet herzustellen, kam es ausgehend von Aclonifen-SC-Formulierungen enthaltend TSP-EO, zu unerwünschten Effekten. Die Beifügung von Flufenacet führte zu einem starken Bodensatz, der zeigte, dass Formulierungen auf dieser Basis nicht herstellbar sind, da die notwendige Lagerstabilität fehlt.

Die Aufgabe der vorliegenden Erfindung bestand darin, wässrige Pflanzenschutzmittelformulierungen bereit zu stellen, die die Wirkstoffe Aclonifen und Flufenacet enthalten, frei von Tristyrolphenolethoxylaten (TSP-EO) sind, über eine ausreichend gute biologische Aktivität verfügen und eine ausreichende Lagerstabilität aufweisen, wobei negative Effekte wie Ausflockungen, Sedimentation, Agglomerationen und Kristallwachstum nicht mehr auftreten.

Diese Aufgabe wird gelöst durch wässrige Dispersionen, enthaltend die Wirkstoffe Aclonifen und Flufenacet und einer Mischung bestehend aus anionischen Tensiden aus der Gruppe der Naphthalinsulfonate oder aus der Gruppe der Kondensationsprodukte von Naphthalinsulfonaten mit Formaldehyd, nichtionischen Tensiden aus der Gruppe der Di- und Tri-block-copolymere aus Alkylenoxiden als Ersatz für Tristyrolphenolethoxylaten (TSP-EO), einer spezifischen Verdickermischung aus mindestens einem organischem Verdicker auf Basis Xanthan sowie mindestens einem anorganischem Verdicker, bevorzugt auf Basis eines synthetischen Verdickers aus der Reihe der Kieselsäuren, weiteren agrochemischen Wirkstoffen, vorzugsweise Diflufenican, der gegebenenfalls noch weitere übliche Hilfs- und Zusatzstoffe zugesetzt werden können.

Die vorliegende Erfindung betrifft somit wässrige Dispersionen, enthaltend
a) 20 bis 45 % Aclonifen und 4 bis 20% Flufenacet, bei einer Gesamtmenge von 24 bis 65%,
b) 0,3 bis 3% eines oder mehrerer anionischer Tenside aus der Gruppe der Sulfonate, ausgewählt aus den Gruppen auf Basis der Naphtaline, der Alkylaryl, der kondensierten Naphthaline und auf Basis von Lignin,
c) 2 bis 15% eines oder mehrerer nichtionischer Tenside aus der Gruppe der Di- und Tri-block-copolymere aus Alkylenoxiden,
d) 0,01 bis 1% eines organischen Verdickers auf Basis von Xanthan,
e) 0,1 bis 3 % eines anorganischen Verdickers,
f) 0 bis 50% eines oder mehrerer von Komponente a) verschiedener agrochemischer Wirkstoffe, vorzugweise 1 bis 12% Diflufenican,
g) 0 bis 20% eines oder mehrerer weiterer üblicher Hilfs- und Zusatzstoffe,
und
20 bis 70% Wasser;
wobei die Komponenten d) und e) in einem Verhältnis von 1:300 bis 10:1 zueinander vorliegen.

Eine besonders bevorzugte Ausführungsform sind erfindungsgemäße Dispersionen, worin enthalten sind
a) 20 bis 45% Aclonifen und 4 bis 20% Flufenacet,
b) 0,3 bis 3% eines oder mehrerer anionischer Tenside aus der Gruppe der Naphthalinsulfonate, Alkylarylsulfonate oder Ligninsulfonate, sowie der Gruppe der Kondensationsprodukte von Naphthalinsulfonaten mit Formaldehyd,
c) 2 bis 10% eines oder mehrerer nichtionischer Tenside aus der Gruppe der Di- und Tri-block-copolymere aus Alkylenoxiden,
d) 0,05 bis 0,5% eines organischen Verdickers auf Basis von Xanthan,
e) 0,3 bis 1,5 % eines anorganischen Verdickers,
f) 0 bis 50% eines oder mehrerer von Komponente a) verschiedener agrochemischer Wirkstoffe, vorzugweise 1 bis 12% Diflufenican,
g) 0 bis 20% eines oder mehrerer weiterer üblicher Hilfs- und Zusatzstoffe,
und
20 bis 70% Wasser.

Eine ganz besonders bevorzugte Ausführungsform sind erfindungsgemäße Dispersionen, worin enthalten sind
a) 24 bis 39% Aclonifen und 6 bis 14% Flufenacet,
b) 0,4 bis 2,5% eines oder mehrerer anionischer Tenside aus der Gruppe der Naphthalinsulfonate, Alkylarylsulfonate oder Ligninsulfonate, sowie der Gruppe der Kondensationsprodukte von Naphthalinsulfonaten mit Formaldehyd,
c) 2,5 bis 8% eines oder mehrerer nichtionischer Tenside aus der Gruppe der Di- und Tri-block-copolymere aus Alkylenoxiden,
d) 0,1 bis 0,3% eines organischen Verdickers auf Basis von Xanthan,
e) 0,4 bis 1,3 % eines anorganischen Verdickers,
f) 0 bis 50% eines oder mehrerer von Komponente a) verschiedener agrochemischer Wirkstoffe, vorzugweise 2 bis 10% Diflufenican,
g) 0 bis 20% eines oder mehrerer weiterer üblicher Hilfs- und Zusatzstoffe,
und
25 bis 70% Wasser;
wobei die Komponenten d) und e) in einem Verhältnis von 1:15 bis 1:1 zueinander vorliegen.

Alle Prozentangaben sind hier und in der gesamten Beschreibung Gewichtsprozente (Gew.-%) und beziehen sich, wenn nicht anders definiert, auf das relative Gewicht der jeweiligen Komponente bezogen auf das Gesamtgewicht der Formulierung
Die herbiziden Wirkstoffe (Komponenten a) Aclonifen (10) und Flufenacet (397) als Einzelstoffe oder als Mischung sind z.B. bekannt aus "The Pesticide Manual", 16. Auflage (2012), The British Crop Protection Council (Anmerkung: Verzeichnisnummer in Klammern).
Der Anteil dieser Wirkstoffe in den erfindungsgemäßen Dispersionen (Komponente a) kann für Aclonifen 0,1 - 50 Gew.-%, bevorzugt 20 - 45 Gew.-%, besonders bevorzugt 24 - 39 Gew.-%, und für Flufenacet 0,1 - 50 Gew.-%, bevorzugt 4 - 20 Gew.-%, besonders bevorzugt 6 - 14 Gew.-% betragen. Anteilsmäßig kann die Gesamtmenge beider Wirkstoffe zwischen 24 - 65% Gew-%, bevorzugt 25 - 55 Gew.-%, besonders bevorzugt 30 - 50 Gew.-% betragen.

Beispiele für anionische Tenside (Komponenten b) aus der Gruppe der Naphthalinsulfonate sind Galoryl® MT 800 (Natrium-Dibutylnaphthalinsulfonat), Morwet® IP (Diisopropylnaphthalinsulfonat) und Nekal® BX (Alkylnaphthalinsulfonat). Beispiele für anionische Tenside b) aus der Gruppe der Kondensationsprodukte von Naphthalinsulfonaten mit Formaldehyd sind Galoryl® DT 201 (Naphthalinsulfonsäure Hydroxypolymer mit Formaldeyd und Methylphenol Natriumsalz), Galoryl® DT 250 (Kondensationsprodukt aus Phenol- und Naphthalinsulfonaten), Reserve® C (Kondensationsprodukt aus Phenol- und Naphthalinsulfonaten), Morwet® D-425 (Akzo-Nobel) sowie Tersperse® D-2020 (Huntsman) als jeweils Naphthalinsulfonaten-Formaldehydkondensat. Bevorzugt sind unsubstituierte Naphthalinsulfonatformaldehykondensate, wie z.B. Produkte Morwet® D-425. Beispiele auf Ligninbasis sind beispielsweise erhältliche Calcium, Kalium, Ammonium- oder Natrium-lignin-sulfonate wie etwa Reax® 88, Kraftsperse® 25S (Westvaco) sowie Borresperse® Typen (Borregard). Ganz besonders bevorzugt sind Kondensationsprodukte auf Basis von Naphthalinsulfonat.
Der Anteil der anionischen Tenside in den erfindungsgemäßen Dispersionen (Komponente b) kann 0,3 - 3 Gew.-%, bevorzugt 0,3 - 2,5 Gew.-%, besonders bevorzugt 0,4 - 2,5 Gew.-% betragen.

Als nichtionische Tenside (Komponenten c) aus der Gruppe der Di- und Tri-block-copolymere aus Alkylenoxiden kommen z.B. Verbindungen in Frage, die auf Basis von Ethylen- und Propylenoxid aufgebaut sind, mit mittleren Molmassen zwischen 200 und 10000, vorzugsweise 1000 bis 4000 g/mol, wobei der Massenanteil des polyethoxylierte Blocks zwischen 10 und 80% variiert, wie z.B. Synperonic® PE-Reihe (Uniqema), Pluronic® PE-Reihe (BASF; wie z.B. Pluronic® PE 10500), VOP® 32- oder Genapol® PF-Reihe (Clariant), wobei die Produkte der genannten Reihen bevorzugt sind.
Der Anteil der nichtionischen Tenside in den erfindungsgemäßen Dispersionen (Komponente c) kann 2 - 15 Gew.-%, bevorzugt 2 - 10 Gew.-%, besonders bevorzugt 2,5 - 8 Gew.-% betragen.

Die erfindungsgemäßen Komponenten b) und c) ermöglichen den Austausch von Tristyrolphenolethoxylaten (TSP-EO), die generell sowohl anionisch wie auch nicht-ionisch vorliegen. Ein typischer anionischer Vertreter ist Soprophor® FLK (Solvay), ein typischer nichtionischer Vertreter ist Soprophor® BSU (Solvay).

Als organische Verdicker (Komponenten d) kommen organische natürliche bzw. biotechnologisch modifizierte oder organisch synthetische Verdicker in Frage. Typische synthetische Verdicker sind aus der Rheostrux®- (Croda), Thixin®- oder Thixatrol®-Reihe (Elementis). Diese sind typischerweise auf Basis von Acrylaten. Typische organische Verdicker sind auf Basis von Xanthan oder Cellulose oder einer Kombination davon. Bevorzugt werden natürliche modifzierte Verdicker auf Basis von Xanthan verwendet. Typische Vertreter sind beispielsweise Rhodopol® (Solvay) und Kelzan® (Kelco Corp.) sowie Satiaxane® (Cargill).
Der Anteil der organischen Verdicker in den erfindungsgemäßen Dispersionen (Komponente d) kann bis 5 Gew.-%, bevorzugt 0,01 - 1,0 Gew.-%, besonders bevorzugt 0,01 - 0,6 Gew.-%, ganz besonders bevorzugt 0,05 - 0,5 Gew.-% und insbesondere bevorzugt 0,1 - 0,3 Gew.-% betragen.

Als anorganische Verdicker (Komponenten e) kommen beispielsweise:
1) modifizierte natürliche Silikate, wie chemisch modifizierte Bentonite, Hectorite, Attapulgite, Montmorillonite, Smektite oder andere Silikatmineralien, wie Bentone® (Elementis), Attagel® (Engelhard), Agsorb® (Oil-Dri Corporation) oder Hectorite® (Akzo Nobel), oder der Van Gel®-Reihe (R.T. Vanderbilt),
2) synthetische Kieselsäuren sowie deren Derivate, wie Silikate der Sipernat®-, Aerosil®- oder Durosil®-Reihe (Degussa), der CAB-O-SIL®-Reihe (Cabot). Bevorzugt ist Kieselsäure Der Anteil anorganischer Verdicker in den erfindungsgemäßen Dispersionen (Komponente e) kann bis 5 Gew.-%, bevorzugt 0,1 - 3 Gew.-%, besonders bevorzugt 0,2 - 1,5 Gew.-%, ganz besonders bevorzugt 0,3 - 1,5 Gew.-% und insbesondere bevorzugt 0,4 - 1,3 Gew.-% betragen.

Erfindungsgemäß ist auch die spezifische Mischung aus organischen Verdickern d) und anorganischem Verdickern e), die in folgenden Verhältnissen zueinander vorliegen:
(Komponente d) : (Komponente e)
im allgemeinen (1:300) - (10:1),
ganz besonders bevorzugt (1:15) - (1:1).

Als gegebenenfalls zugesetzte, von Komponente a) verschiedene agrochemische Wirkstoffe (Komponenten f) sind geeignet Herbizide, Fungizide, Insektizide, Pflanzenwachstums-regulatoren, Safener und dergleichen. Diese Wirkstoffe sind z.B. bekannt aus "The Pesticide Manual", 16. Auflage (2012, The British Crop Protection Council (Anmerkung: Verzeichnisnummer in Klammern) Bevorzugt ist der herbizide Wirkstoff Diflufenican (272).
Der Anteil gegebenenfalls zugesetzter von Komponente a) verschiedener agrochemischer Wirkstoffe in den erfindungsgemäßen Dispersionen (Komponente f) kann bis 50 Gew.-%, bevorzugt bis 40 Gew.-%, besonders bevorzugt bis 30 Gew.-% betragen. Im Falle des herbiziden Wirkstoffs Diflufenican kann der Anteil 0,1 - 50 Gew.-%, bevorzugt 1 - 12 Gew.-%, besonders bevorzugt 2 - 10 Gew.-% betragen.

Die gegebenenfalls zugesetzten weiteren üblichen Hilfs- und Zusatzstoffe (Komponente g) sind beispielsweise Entschäumer, Frostschutzmittel, strukturbildende Stoffe, Konservierungsmittel, Antioxidantien, Farb- und Duftstoffe, Netz-, Anti-Drift-, Haft- und Penetrationsmittel (Adjuvantien), Düngemittel, sowie weitere von den Komponenten b) und c) verschiedene Tenside.

Geeignete Entschäumer sind oberflächenaktive Verbindungen auf Silikon- bzw. Silanbasis wie die Tegopren®-Produkte (Goldschmidt), die SE®-Produkte (Wacker), sowie die Bevaloid®-, und Silcolapse®-Produkte (Solvay, Dow Corning, Reliance, GE, Bayer). Bevorzugt sind SE®- (Wacker), Rhodorsil®- Produkte (Bluestar Silicones) und besonders bevorzugt sind z.B. Produkte wie Silcolapse® 5020.

Geeignete Frostschutzmittel sind solche aus der Gruppe der Harnstoffe, Diole und Polyole, wie Ethylenglycol und Propylenglycol, bevorzugt Propylenglycol.
Geeignete Konservierungsmittel sind z.B. Produkte wie Acticide® MBS (Biozid, Thor Chemie). Geeignete Antioxidantien, Farb- und Duftstoffe, Netz-, Anti-Drift-, Haft- und Penetrationsmittel (Adjuvantien) sowie Düngemittel sind dem Fachmann bekannt.
Geeignete weitere von den Komponenten b) und c) verschiedene Tenside sind beispielsweise Emulgatoren, Netzmittel und Dispergatoren.

Als Emulgatoren, Netzmittel und Dispergatoren kommen z.B. nichtionische Emulgatoren und Dispergatoren in Frage, z.B.:
1) polyalkoxylierte, vorzugsweise polyethoxylierte, gesättigte und ungesättigte aliphatische Alkohole,
   - mit 8 bis 24 C-Atomen im Alkylrest, der sich von den entsprechenden Fettsäuren oder aus petrochemischen Produkten ableitet, und
   - mit 1 bis 100, vorzugsweise 2 bis 50, Ethylenoxideinheiten (EO), wobei die freie HydroxyGruppe gegebenenfalls alkoxyliert ist, und
   - die z.B. kommerziell als Genapol® X- und Genapol® O-Reihe (Clariant), Crovol® M-Reihe (Croda) oder Lutensol®-Reihe (BASF) erhältlich sind;
2) polyalkoxylierte, vorzugsweise polyethoxylierte Hydroxyfettsäuren oder Hydroxyfettsäuren enthaltene Glyceride, wie z.B. Ricinin bzw. Rizinusöl, mit einem Ethoxylierungsgrad zwischen 10 und 80, bevorzugt 25 bis 40, wie z.B. Emuisogen® EL-Reihe (Clariant) oder Agnique® CSO-Reihe (BASF);
3) polyalkoxylierte, vorzugsweise polyethoxylierte Sorbitanester, wie z.B. Atplus® 309 F (Croda) oder Alkamuls®-Reihe (Solvay).
Bevorzugte nichtionische Emulgatoren und Dispergatoren sind z.B. polyethoxylierte Alkohole und polyethoxylierte Triglyceride, die Hydroxyfettsäuren enthalten.

Es kommen auch ionische Emulgatoren und Dispergatoren in Frage, z.B.:
1) polyalkoxylierte, vorzugsweise polyethoxylierte Emulgatoren/Dispergatoren, die ionisch modifiziert sind, z.B. durch Umsetzung der endständigen freien Hydroxylfunktion des Polyethylenoxidblocks zu einem Sulfat- oder Phosphatester (z.B. als Alkali- und Erdalkalimetallsalze), wie z.B. Genapol® LRO oder Dispergiermittel 3618 (Clariant), Emulphor® (BASF) oder Crafol® AP (Cognis);
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox® 3377BM (Croda), Empiphos® TM-Reihe (Huntsman);
3) Polyelektrolyte, wie Polystyrolsulfonat oder sulfonierte ungesättigte oder aromatische Polymere (Polystyrole, Polybutadiene oder Polyterpene)
Der Anteil der gegebenenfalls zugesetzten weiteren üblichen Hilfs- und Zusatzstoffe in den erfindungsgemäßen Dispersionen (Komponente g) kann bis 20 Gew.-%, bevorzugt bis 15 Gew.-% betragen.

Der Anteil der Komponente Wasser in den erfindungsgemäßen Dispersionen kann 20 - 70 Gew.-%, bevorzugt 20 - 60 Gew.-%, besonders bevorzugt 30 - 55 Gew.-% ganz besonders bevorzugt 25 - 45 Gew.-% betragen.

Die vorstehend genannten Formulierungshilfsmittel der Komponenten b), c), d), e) und g) sind dem Fachmann bekannt und/oder werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, 4. Aufl., C. Hanser Verlag, München 1986.

Zur Anwendung können die erfindungsgemäßen Dispersionen in üblicher Weise verdünnt werden, z.B. mittels Wasser. Es kann vorteilhaft sein, den erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche herbiziden Mittel, die auf Basis der erfindungsgemäßen Dispersionen hergestellt werden können.

Diese auf Basis der erfindungsgemäßen Dispersionen hergestellten, herbiziden Mittel, im Folgenden auch erfindungsgemäße herbizide Mittel genannt, weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfasst. Dabei können die Mittel z.B. im Vorsaat-, Vorauflauf- oder Nachauflaufverfahren ausgebracht werden. Im Einzelnen seien beispielhaft einige Vertreter der mono- und dikotylen Unkrautflora genannt, die durch die erfindungsgemäßen herbiziden Mittel kontrolliert werden können, ohne dass durch die Nennung eine Beschränkung auf bestimmte Arten erfolgen soll

Auf der Seite der monokotylen Unkrautarten werden z.B. Apera spica venti, Avena spp., Alopecurus spp. (wie beispielsweise Alopecurus myosuroides; syn.: Ackerfuchsschwanz, ALOMY), Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und aufseiten der perennierenden Spezies Agropyron, Cynodon, Imperata sowie Sorghum und auch ausdauernde Cyperusarten gut erfaßt.
Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, dass die in den herbiziden Mitteln verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Obgleich die herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die erfindungsgemäßen herbiziden Mittel eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z.B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen herbiziden Mittel in wirtschaftlich bedeutenden transgenen Kulturen von Nutz- und Zierpflanzen, z.B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei man ein oder mehrere erfindungsgemäße herbizide Mittel auf die Schadpflanzen, Pflanzenteile, Pflanzensamen oder die Fläche auf der die Pflanzen wachsen, z.B. die Anbaufläche appliziert
Die Pflanzenkulturen können auch gentechnisch verändert oder durch Mutationsselektion erhalten sein und sind bevorzugt tolerant gegenüber Acetolactatsynthase (ALS)-Inhibitoren.

Bevorzugt werden die erfindungsgemäßen herbiziden Mittel im Vorauflauf und Nachauflauf verwendet, besonders bevorzugt im Vorauflauf, ganz besonders bevorzugt im Vorauflauf bei gesätem Wintergetreide (im Rahmen einer Herbst-Applikation)
Daneben werden weitere besondere Ausführungsformen der erfindungsgemäßen wässrigen Dispersionen und herbiziden Mittel in den Ansprüchen offenbart.

Die Herstellung der erfindungsgemäßen Dispersionen kann nach dem Fachmann bekannten Verfahren erfolgen; beispielsweise nach Houben-Weil durch Nassvermahlung mittels Perlmühle (siehe: Winnacker-Küchler, "Chemische Technologie", Band 7, 4. Aufl., C. Hanser Verlag, München 1986; Wade van Valkenburg, "Pesticide Formulations", Marcel Dekker, N.Y. 1973; K. Martens, "Spray Drying" Handbook, 3rd Ed., G. Goodwin Ltd., London 1979). Von Vorteil ist hierbei gegebenenfalls eine gleichmäßige Partikelverteilung der betreffenden Wirkstoffe, um zusätzlich Kristallwachstum und Ausflockung weiter zu verhindern.

In der nachfolgenden Tabelle finden sich Beispiele für erfindungsgemäße wässrige Dispersionen.

Die in den nachfolgenden Beispielen verwendeten Begriffe haben folgende Bedeutung:
- Aclonifen: = Common name (BSI, pa ISO); IUPAC name: 2-chloro-6-nitro-3-phenoxyaniline (Bayer CropScience AG)
- Flufenacet: = Common name (BSI, pa ISO); IUPAC name: 4'-fluoro-N-isopropyl-2-(5-trifluoromethyl-1,3,4-thiadiazol-2-yloxy)acetanilide (Bayer CropScience AG)
- Diflufenican: = Common name (BSI, draft E-ISO, (m) draft F-ISO); IUPAC name: 2',4'-difluoro-2-(α,α,α-trifluoro-m-tolyloxy)nicotinanilide (Bayer CropScience AG)
- Morwet® D-425: = Naphthalinsulfonsäure-Formaledhyd-Kondensat, Natriumsalz (Akzo Nobel)
- Pluronic® PE 10500: = Polypropylenoxid-polyethylenoxid-(PO-EO)-Blockpolymer, nicht-ionisch (BASF)
- TSP-EO: = Tensidgruppe: Tristyrolphenolethoxylate
- Soprophor® FLK: = Vertreter der TSP-EO-Gruppe: Ethoxyliertes (16 EO) Tristyrylphenol phosphate, Kaliumsalz, anionisch (Solvay)
- Soprophor® BSU: = Vertreter der TSP-EO-Gruppe: Ethoxyliertes (16 EO) Tristyrylphenol, nicht-ionisch (Solvay)
- Rhodopol® G: = Xanthan Derivat, organischer Verdicker (Solvay)
- Aerosil® 200: = Pyrogene Kieselsäure, anorganischer Verdicker (Evonik)
- Citronensäure: = mehrbasige organische Säure
- Silcolapse® 411: = Silikon-Entschäumer (Bluestar Silicones)
- Glycerin: = Frostschutzmittel
- Proxel® GXL: = Konservierungsmittel (Biozid, Arch)

### 1. Herstellung der wässrigen Dispersionen

Zur Herstellung der in Tabelle 1 genannten Beispiele wird zunächst Wasser vorgelegt. Unter Rühren werden anschließend Aclonifen und Flufenacet (Komponente a) (und gegebenenfalls weitere Wirkstoffe (Komponente f)) sowie die weiteren Komponenten b), c), e) und g) hinzugegeben (ohne besondere Reihenfolge). Anschließend erfolgt eine Nassvermahlung beispielsweise mittels einer Perlmühle. Abschließend wird der organische Verdicker (Komponente d) zugegeben.

**Tabelle 1: Zusammensetzungen (Angaben in Gewichtsprozent; Gew.-%)**

| Komponente | | Erfindungsgemäße Beispiele | | | | | | | Vergleichsbeispiele ¹⁾ | | |
|---|---|---|---|---|---|---|---|---|---|---|---|
| | | 1 | 2 | 3 | 4 | 5 | 6 | 7 | V1 | V2 | V3 |
| a | Aclonifen | 37 | 37 | 37 | 37 | 31 | 21 | 33,3 | 37 | 37 | 37 |
| a | Flufenacet | 12 | 9,8 | 6,1 | 7,4 | 8,2 | 12,8 | 13,3 | 9,8 | 9,8 | 9,8 |
| f | Diflufenican | - | 2,45 | 4,9 | 2,45 | 9,8 | 4,4 | 6,6 | 2,45 | 2,45 | 2,45 |
| b | Morwet® D-425 | 1 | 1 | 1 | 1 | 1 | 1 | 1 | 1 | 1 | 1 |
| c | Pluronic® PE 10500 | 5 | 5 | 5 | 5 | 5 | 5 | 5 | - | 5 | 5 |
| - | Soprophor® FLK | - | - | - | - | - | - | - | 2 | - | - |
| - | Soprohor® BSU | - | - | - | - | - | - | - | 3 | - | - |
| d | Rhodopol® G | 0,2 | 0,2 | 0,2 | 0,2 | 0,2 | 0,2 | 0,2 | 0,2 | 0,2 | - |
| e | Aerosil® 200 | 1 | 1 | 1 | 1 | 1 | 1 | 1 | 1 | - | 1 |
| g | Citronensäure | 0,2 | 0,2 | 0,2 | 0,2 | 0,2 | 0,2 | 0,2 | 0,2 | 0,2 | 0,2 |
| g | Silcolapse® 411 | 0,5 | 0,5 | 0,5 | 0,5 | 0,5 | 0,5 | 0,5 | 0,5 | 0,5 | 0,5 |
| g | Glycerin | 5 | 5 | 5 | 5 | 5 | 5 | 5 | 5 | 5 | 5 |
| g | Proxel® GXL | 0,2 | 0,2 | 0,2 | 0,2 | 0,2 | 0,2 | 0,2 | 0,2 | 0,2 | 0,2 |
| Wasser | | 37,9 | 37,65 | 38,9 | 40,05 | 37,9 | 48,7 | 33,7 | 37,9 | 38,65 | 37,85 |
| Dichte in g/mL | | 1,22 | 1,22 | 1,22 | 1,22 | 1,22 | 1,17 | 1,23 | 1,22 | 1,22 | 1,22 |
| Gesamt: | | 100 | 100 | 100 | 100 | 100 | 100 | 100 | 100 | 100 | 100 |

| | | | | | | | | | | | |
|---|---|---|---|---|---|---|---|---|---|---|---|
| ¹⁾ Erläuterung der Vergleichsbeispiele: - V1 = Modifizierte Formulierung auf Basis der handelsüblichen Bandur 600 SC Formulierung enthaltend TSP-EO und die Komponenten d) und e) - die Modifikation umfasst jeweils die Zugabe der Komponenten a) bzw. f) im Hinblick auf die bessere Vergleichbarkeit mit den erfindungsgemäßen Beispielen; - V2 + V3 = Formulierungen ohne die spezifische Verdicker-Kombination der Komponenten d) und e) - analog zur Zusammensetzung vom erfindungsgemäßen Beispiel 2. | | | | | | | | | | | |

### 2. Lagerstabilität und weitere Formulierungseigenschaften der wässrigen Dispersionen

Die erfindungsgemäßen Dispersionen der Beispiele 1 bis 7 weisen eine ausgezeichnete Lagerstabilität auf. Sie sind bei Raumtemperatur mindestens 2 Jahre und bei 40°C mindestens 3 Monate ohne negative Veränderungen stabil. In Tabelle 2 werden die erfindungsgemäßen Beispiele mit den nicht erfindungsgemäßen Vergleichsbeispielen aus Tabelle 1 verglichen.

Verfahren: Alle Tests wurden nach dem im Pflanzenschutz üblichen CIPAC Methoden durchgeführt (CIPAC = Collaborative International Pesticides Analytical Council; www.cipac.org). Die Langzeitlagerung wurde nach CIPAC MT 46.3 bei 8 Wochen 40°C Lagerungszeit durchgeführt. Die nachfolgend verwendeten Begriffe haben folgende Bedeutung:
- 0TW = Prüfergebnis nach Null Tagen Lagerung.
- 8W40 = Prüfergebnis des beschleunigten Lagerungstest (8 Wochen 40°C) zur Überprüfung der Langzeitstabilität eines Formulierungsprodukts.
- Suspendierbarkeit = Wirkstoff-Verteilung in einer 1% wässrigen Lösung (100% = vollständig homogen verteilt, 0% = vollständig sedimentiert);
- Suspendierbarkeit 8W40 = Wirkstoff- Verteilung nach Lagerungstest (8 Wochen 40°C); Werte < 100% führen zu uneinheitlicher Produktverteilung nach Applikation; gemäß internationalen Anforderungen müssen Formulierungsprodukte Werte > 60% aufweisen D90 = Wirkstoff-Partikelgröße (Laserstreuung 90% aller Volumenpartikel).
- D90 8W40 = Wirkstoff-Partikelgröße nach Lagerungstest (8 Wochen 40°C); erhöhte Werte deuten auf Kristallwachstum hin, wobei Erhöhungen um Faktor 2 als akzeptabel gelten, während Erhöhungen um Faktor 4 nicht mehr akzeptabel sind Sediment = Werte > 10% kennzeichnen starke Bodensatz-Bildung.
- Sediment aufschüttelbar = Ja für akzeptabel; Nein für unbrauchbare Formulierungsprodukte, da Wirkstoffe nicht mehr in eine Spritzbrühe überführt werden können.
- Nasssiebung = Maß für mögliche Filterverstopfungen bei der Spritz-Applikation; Werte > 0,1% auf 150 µm Sieb sowie > 0,2% auf 45 µm Sieb (jeweils bezogen auf die eingesetzte Menge an Formulierung) sind nicht akzeptabel.

**Tabelle 2: Lagerstabilität und weitere Formulierungseigenschaften - Vergleich Beispiel 2 (erfindungsgemäß) mit den Vergleichsbeispielen V1-V3 (nicht erfindungsgemäß)**

| Testmethode | CIPAC Prüfnorm | Beispiel 2 | Vergleichsbeispiele | | | |
|---|---|---|---|---|---|---|
| | | | V1 | V2 | V3 | Beobachtung -> Kommentar |
| Suspendierbarkeit 0TW | MT 184 | 88% | 85% | 88% | 88% | |
| Suspendierbarkeit 8W40 | MT 184 | 73% | < 60% | <60% | < 60% | Unterhalb der Anforderungen |
| D90 0TW | MT 187 | 7 µm | 7 µm | 7 µm | 7 µm | |
| D90 8W40 | MT 187 | 17 µm | 43 µm | 21 µm | 52 µm | Kristallwachstum |
| Sediment 8W40 | MT 148 | 4% | 31% | 46% | 87% | Bodensatz-Bildung |
| Sediment aufschüttelbar, 8W40 | MT 148 | Ja | Nein | Nein | Nein | Unbrauchbar |
| Nasssiebung 45 µm 8W40 | MT 185 | 0,05% | 0,5% | 0,4% | 1,5% | Bodensatz-Bildung -> Filterverstopfung |
| Nasssiebung 150 µm 8W40 | MT 185 | 0,01 | 0,05% | 0,05% | 0,1% | Bodensatz-Bildung -> Filterverstopfung |

Kommentar: Die Versuche zur Lagerstabilität zeigen, dass nur Beispiel 2 (enthaltend die erfindungsgemäße Verdicker-Mischung aus Komponente d), hier Rhodopol® G, und Komponente e), hier Aerosil® 200, im Verbindung mit der Wirkstoff-Mischung a) bzw. f), Komponente b), hier Morwet® D-425, und Komponente c), hier Pluronic® PE 10500), über die gewünschten Formulierungseigenschaften, wie Lagerstabilität, verfügt.
Das nicht erfindungsgemäße Vergleichsbeispiel V1 (enthaltend TSP-EO) ist nicht lagerstabil und zeigt Kristallwachstum. Die Vergleichsbeispiele V2 und V3 (ohne erfindungsgemäße Verdicker-Mischung) zeigen starke Bodensatz-Bildung, die zu unbrauchbaren Formulierungen führt Die erfindungsgemäßen Beispiele 1, 3 bis 7 aus Tabelle 1 weisen die gleichen gewünschten Formulierungseigenschaften auf wie Beispiel 2.

### 3. Herbizide Wirksamkeit der wässrigen Dispersionen

Verfahren: Standardmäßige Herbst-Feld-Applikation von 200L/ha Spritzbrühen mit der Dosierung von 600 g Aclonifen, 240 g Flufenacet und 120 g Diflufenican pro Hektar. Ausgewertet wurde die herbizide Wirksamkeit auf den Ackerfuchsschwanz (Alopecurus myosuroides; ALOMY) sowie die Phytotoxizität auf die Kulturpflanzen Wintergerste und Winterweizen; gemäß einer Skala von 0-100% visuell im Vergleich zu einer unbehandelten Vergleichsgruppe bewertet: 0% = keine erkennbare Wirkung im Vergleich zur unbehandelten Vergleichsgruppe; 100% = vollständige Wirkung im Vergleich zur unbehandelten Vergleichsgruppe.

**Tabelle 3: Vergleichsversuch: (Tank-Mix vs. Co-Formulierung)**

| Applikationsform | Produkte ¹⁾ | Herbizide Wirksamkeit gegen ALOMY | Phytotoxizität an ... | |
|---|---|---|---|---|
| | | | Wintergerste | Winterweizen |
| Tank-Solo | Bandur | 28% | 2% | 1% |
| Tank-Mix | Brodal + | 83% | 8% | 2% |
| | Cadou | | | |
| | Bandur + | 88% | 18% | 5% |
| | Cadou + | | | |
| | Brodal | | | |
| Co-Formulierung | Tabelle 1: Beispiel 7 (erfindungsgemäß) | 92% | 12% | 2% |

| | | | | |
|---|---|---|---|---|
| ¹⁾ Verwendete handelsübliche Produkte: - Bandur = Bandur 600 SC-Formulierung enthaltend 600 g/L Aclonifen (50 Gew.-%) und TSP-EO (Bayer CropScience AG) - Cadou = Cadou 508 SC-Formulierung enthaltend 508 g/L Flufenacet (42 Gew.-%) und Komponente c): Pluronic PE 10500 (Bayer CropScience AG) - Brodal = Brodal 500 SC-Formulierung enthaltend 500 g/L Diflufenican (42 Gew.-%) und TSP-EO (Bayer CropScience AG) | | | | |

Kommentar: Die erfindungsgemäße Co-Formulierung mit den herbiziden Wirkstoffen (Beispiel 7) ohne TSP-EO zeigt nicht nur eine höhere herbizide Wirksamkeit als der vergleichbare Tank-Mix (92% vs. 88%) sondern verursacht auch eine geringere Phytotoxizität an den Kulturpflanzen Wintergerste (12% vs. 18%) und Winterweizen (2% vs. 5%).
Dieser Vergleichsversuch belegt, dass die erfindungsgemäße Co-Formulierung der herbiziden Wirkstoffe vorteilhafter ist als der entsprechende Tank-Mix der einzeln formulierten Wirkstoffe.

## Patentansprüche

1. Wässrige Dispersionen, enthaltend
a) 20 bis 45 % Aclonifen und 4 bis 20% Flufenacet, bei einer Gesamtmenge von 24 bis 65%,
b) 0,3 bis 3% eines oder mehrerer anionischer Tenside aus der Gruppe der Sulfonate, ausgewählt aus den Gruppen auf Basis der Naphthaline, der Alkylaryle, der kondensierten Naphthaline und auf Basis von Lignin,
c) 2 bis 15% eines oder mehrerer nichtionischer Tenside aus der Gruppe der Di- und Tri-block-copolymere aus Alkylenoxiden,
d) 0,01 bis 1% eines organischen Verdickers auf Basis von Xanthan,
e) 0,1 bis 3 % eines anorganischen Verdickers,
f) 0 bis 50% eines oder mehrerer von Komponente a) verschiedener agrochemischer Wirkstoffe, g) 0 bis 20% eines oder mehrerer weiterer üblicher Hilfs- und Zusatzstoffe,
und
20 bis 70% Wasser;
wobei die Komponenten d) und e) in einem Verhältnis von 1:300 bis 10:1 zueinander vorliegen.

2. Dispersionen gemäß Anspruch 1, enthaltend
a) 20 bis 45% Aclonifen und 4 bis 20% Flufenacet,
b) 0,3 bis 3% eines oder mehrerer anionischer Tenside aus der Gruppe der Naphthalinsulfonate, Alkylarylsulfonate oder Ligninsulfonate, sowie der Gruppe der Kondensationsprodukte von Naphthalinsulfonaten mit Formaldehyd,
c) 2 bis 10% eines oder mehrerer nichtionischer Tenside aus der Gruppe der Di- und Tri-block-copolymere aus Alkylenoxiden,
d) 0,05 bis 0,5% eines organischen Verdickers auf Basis von Xanthan,
e) 0,3 bis 1,5 % eines anorganischen Verdickers,
f) 0 bis 50% eines oder mehrerer von Komponente a) verschiedener agrochemischer Wirkstoffe,
g) 0 bis 20% eines oder mehrerer weiterer üblicher Hilfs- und Zusatzstoffe,
und 20 bis 70% Wasser.

3. Dispersionen gemäß Anspruch 2, enthaltend
a) 24 bis 39% Aclonifen und 6 bis 14% Flufenacet,
b) 0,4 bis 2,5% eines oder mehrerer anionischer Tenside aus der Gruppe der Naphthalinsulfonate, Alkylarylsulfonate oder Ligninsulfonate, sowie der Gruppe der Kondensationsprodukte von Naphthalinsulfonaten mit Formaldehyd,
c) 2,5 bis 8% eines oder mehrerer nichtionischer Tenside aus der Gruppe der Di- und Tri-block-copolymere aus Alkylenoxiden,
d) 0,1 bis 0,3% eines organischen Verdickers auf Basis von Xanthan,
e) 0,4 bis 1,3 % eines anorganischen Verdickers,
f) 0 bis 50% eines oder mehrerer von Komponente a) verschiedener agrochemischer Wirkstoffe,
g) 0 bis 20% eines oder mehrerer weiterer üblicher Hilfs- und Zusatzstoffe,
und
25 bis 70% Wasser;
wobei die Komponenten d) und e) in einem Verhältnis von 1:15 bis 1:1 zueinander vorliegen.

4. Dispersionen gemäß einem der Ansprüche 1 bis 3 , wobei der von a) verschiedene agrochemische Wirkstoff Diflufenican ist (Komponente f).

5. Dispersionen gemäß einem oder mehreren der Ansprüche 1 bis 4, zusätzlich enthaltend einen oder mehrere weitere übliche Hilfs- und Zusatzstoffe (Komponente g) wie Entschäumer, Frostschutzmittel, strukturbildende Stoffe, Konservierungsmittel, Antioxidantien, Farb- und Duftstoffe, Netz-, Anti-Drift-, Haft- und Penetrationsmittel (Adjuvantien) und Düngemittel.

6. Verfahren zur Herstellung einer wässrigen Dispersion gemäß einem oder mehreren der Ansprüche 1 bis 5, worin die Komponenten a), b), c), e), g) und gegebenenfalls f) gemischt sowie anschließend vermahlen werden und abschließend Komponente d) zugegeben wird.

7. Verfahren zur Bekämpfung von unerwünschtem Pflanzenwuchs, worin eine wirksame Menge einer wässrigen Dispersion gemäß einem oder mehreren der Ansprüche 1 bis 5 auf die Pflanzen, Teile der Pflanzen, das Saatgut oder die Fläche auf der Pflanzen wachsen, appliziert wird.

8. Verwendung einer wässrigen Dispersion gemäß einem oder mehreren der Ansprüche 1 bis 5, zur Bekämpfung von unerwünschtem Pflanzenwuchs.

9. Verwendung einer wässrigen Dispersion gemäß einem oder mehreren der Ansprüche 1 bis 5, zur Herstellung eines herbiziden Mittels.

10. Verwendung gemäß Anspruch 9, worin das herbizide Mittel eine Suspension oder Suspoemulsion ist.

11. Flüssiges herbizides Mittel, erhältlich durch Verdünnen einer wässrigen Dispersion gemäß einem oder mehreren der Ansprüche 1 bis 5.

12. Flüssiges herbizides Mittel gemäß Anspruch 11, worin das herbizide Mittel eine Emulsion, Suspension, Suspoemulsion oder Lösung ist.

13. Flüssiges herbizides Mittel gemäß einem der Ansprüche 11 oder 12, zusätzlich enthaltend
f) einen oder mehrere von Komponente a) verschiedene agrochemische Wirkstoffe,
g) einen oder mehrere weitere übliche Hilfs- und Zusatzstoffe.

14. Flüssiges herbizides Mittel gemäß Anspruch 13, wobei der von Komponente a) verschiedene agrochemische Wirkstoff Diflufenican ist.

15. Verfahren zur Bekämpfung von unerwünschtem Pflanzenwuchs, worin eine wirksame Menge eines herbiziden Mittels gemäß einem oder mehreren der Ansprüche 11 bis 14 auf die Pflanzen, Teile der Pflanzen, das Saatgut oder die Fläche, auf der Pflanzen wachsen, appliziert wird.

16. Verwendung eines herbiziden Mittels gemäß einem oder mehreren der Ansprüche 11 bis 14, zur Bekämpfung von unerwünschtem Pflanzenwuchs.

17. Verwendung eines herbiziden Mittels gemäß einem oder mehreren der Ansprüche 11 bis 14, zur Bekämpfung von unerwünschtem Pflanzenwuchs im Vorauflauf- und Nachauflauf.

## Claims

1. Aqueous dispersions, comprising
a) 20 to 45% aclonifen and 4 to 20% flufenacet, at a total amount of 24 to 65%,
b) 0.3 to 3% of one or more anionic surfactants from the group of the sulfonates, selected from the groups based on naphthalenes, the alkylaryls, the fused naphthalenes and based on lignin,
c) 2 to 15% of one or more nonionic surfactants from the group of the di- and tri-block-copolymers of alkylene oxides,
d) 0.01 to 1% of an organic thickener based on xanthan gum,
e) 0.1 to 3% of an inorganic thickener,
f) 0 to 50% of one or more agrochemically active compounds different from component a),
g) 0 to 20% of one or more further customary auxiliaries and additives,
and
20 to 70% water;
where the components d) and e) are present in a ratio of from 1:300 to 10:1 to one another.

2. Dispersions according to Claim 1, comprising
a) 20 to 45% aclonifen and 4 to 20% flufenacet,
b) 0.3 to 3% of one or more anionic surfactants from the group of the naphthalene sulfonates, alkylarylsulfonates or lignosulfonates, and from the group of the condensates of naphthalenesulfonates with formaldehyde,
c) 2 to 10% of one or more nonionic surfactants from the group of the di- and tri-block-copolymers of alkylene oxides,
d) 0.05 to 0.5% of an organic thickener based on xanthan gum,
e) 0.3 to 1.5% of an inorganic thickener,
f) 0 to 50% of one or more agrochemically active compounds different from component a),
g) 0 to 20% of one or more further customary auxiliaries and additives,
and 20 to 70% water.

3. Dispersions according to Claim 2, comprising
a) 24 to 39% aclonifen and 6 to 14% flufenacet,
b) 0.4 to 2.5% of one or more anionic surfactants from the group of the naphthalene sulfonates, alkylarylsulfonates or lignosulfonates, and from the group of the condensates of naphthalenesulfonates with formaldehyde,
c) 2.5 to 8% of one or more nonionic surfactants from the group of the di- and tri-block-copolymers of alkylene oxides,
d) 0.1 to 0.3% of an organic thickener based on xanthan gum,
e) 0.4 to 1.3% of an inorganic thickener,
f) 0 to 50% of one or more agrochemically active compounds different from component a),
g) 0 to 20% of one or more further customary auxiliaries and additives,
and
25 to 70% water;
where the components d) and e) are present in a ratio of from 1:15 to 1:1 to one another.

4. Dispersions according to any of Claims 1 to 3, where the agrochemically active compound different from a) is diflufenican (component f).

5. Dispersions according to one or more of Claims 1 to 4, additionally comprising one or more further customary auxiliaries and additives (component g) such as defoamers, antifreeze agents, structure-providing substances, preservatives, antioxidants, colourants and odourants, wetting agents, anti-drift agents, tackifiers and penetrants (adjuvants) and fertilizers.

6. Process for preparing an aqueous dispersion according to one or more of Claims 1 to 5 which comprises mixing and then grinding components a), b), c), e), g) and optionally f) and finally adding component d).

7. Method for controlling unwanted vegetation, which comprises applying an effective amount of an aqueous dispersion according to one or more of Claims 1 to 5 to the plants, parts of the plants, the seed or the area on which the plants grow.

8. Use of an aqueous dispersion according to one or more of Claims 1 to 5 for controlling unwanted vegetation.

9. Use of an aqueous dispersion according to one or more of Claims 1 to 5 for producing a herbicidal composition.

10. Use according to Claim 9, where the herbicidal composition is a suspension or suspoemulsion.

11. Liquid herbicidal composition, obtainable by diluting an aqueous dispersion according to one or more of Claims 1 to 5.

12. Liquid herbicidal composition according to Claim 11, where the herbicidal composition is an emulsion, a suspension, a suspoemulsion or a solution.

13. Liquid herbicidal composition according to either of Claims 11 and 12, additionally comprising
f) one or more agrochemically active compounds different from component a),
g) one or more further customary auxiliaries and additives.

14. Liquid herbicidal composition according to Claim 13, where the agrochemically active compound different from component a) is diflufenican.

15. Method for controlling unwanted vegetation, which comprises applying an effective amount of a herbicidal composition according to one or more of Claims 11 to 14 to the plants, parts of the plants, the seed or the area on which the plants grow.

16. Use of a herbicidal composition according to one or more of Claims 11 to 14 for controlling unwanted vegetation.

17. Use of a herbicidal composition according to one or more of Claims 11 to 14 for controlling unwanted vegetation by the pre-emergence method and post-emergence method.

## Revendications

1. Dispersions aqueuses, contenant :
a) 20 à 45 % d'aclonifen et 4 à 20 % de flufénacet, pour une quantité totale de 24 à 65 %,
b) 0,3 à 3 % d'un ou de plusieurs tensioactifs anioniques du groupe des sulfonates, choisis dans les groupes à base de naphtalines, d'alkylaryles, de naphtalines condensées et à base de lignine,
c) 2 à 15 % d'un ou de plusieurs tensioactifs non ioniques du groupe des copolymères di- et tri-séquencés d'oxydes d'alkylène,
d) 0,01 à 1 % d'un épaississant organique à base de xanthane,
e) 0,1 à 3 % d'un épaississant inorganique,
f) 0 à 50 % d'un ou de plusieurs agents actifs agrochimiques différents du composant a),
g) 0 à 20 % d'un ou de plusieurs auxiliaires et additifs usuels supplémentaires,
et
20 à 70 % d'eau ;
les composants d) et e) étant présents en un rapport de 1:300 à 10:1 l'un par rapport à l'autre.

2. Dispersions selon la revendication 1, contenant :
a) 20 à 45 % d'aclonifen et 4 à 20 % de flufénacet,
b) 0,3 à 3 % d'un ou de plusieurs tensioactifs anioniques du groupe des sulfonates de naphtaline, des sulfonates d'alkylaryle ou des sulfonates de lignine, ainsi que du groupe des produits de condensation de sulfonates de naphtaline avec du formaldéhyde,
c) 2 à 10 % d'un ou de plusieurs tensioactifs non ioniques du groupe des copolymères di- et tri-séquencés d'oxydes d'alkylène,
d) 0,05 à 0,5 % d'un épaississant organique à base de xanthane,
e) 0,3 à 1,5 % d'un épaississant inorganique,
f) 0 à 50 % d'un ou de plusieurs agents actifs agrochimiques différents du composant a),
g) 0 à 20 % d'un ou de plusieurs auxiliaires et additifs usuels supplémentaires,
et 20 à 70 % d'eau.

3. Dispersions selon la revendication 2, contenant :
a) 24 à 39 % d'aclonifen et 6 à 14 % de flufénacet,
b) 0,4 à 2,5 % d'un ou de plusieurs tensioactifs anioniques du groupe des sulfonates de naphtaline, des sulfonates d'alkylaryle ou des sulfonates de lignine, ainsi que du groupe des produits de condensation de sulfonates de naphtaline avec du formaldéhyde,
c) 2,5 à 8 % d'un ou de plusieurs tensioactifs non ioniques du groupe des copolymères di- et tri-séquencés d'oxydes d'alkylène,
d) 0,1 à 0,3 % d'un épaississant organique à base de xanthane,
e) 0,4 à 1,3 % d'un épaississant inorganique,
f) 0 à 50 % d'un ou de plusieurs agents actifs agrochimiques différents du composant a),
g) 0 à 20 % d'un ou de plusieurs auxiliaires et additifs usuels supplémentaires,
et 25 à 70 % d'eau,
les composants d) et e) étant présents en un rapport de 1:15 à 1:1 l'un par rapport à l'autre.

4. Dispersions selon l'une quelconque des revendications 1 à 3, dans lesquelles l'agent actif agrochimique différent de a) est le diflufénican (composant f).

5. Dispersions selon une ou plusieurs des revendications 1 à 4, contenant en outre un ou plusieurs auxiliaires et additifs usuels supplémentaires (composant g) tels que des agents antimousse, des agents antigel, des matières structurantes, des conservateurs, des antioxydants, des colorants et des parfums, des agents mouillants, des agents antidérive, des agents d'adhésion et des agents de pénétration (adjuvants) et des engrais.

6. Procédé de fabrication d'une dispersion aqueuse selon une ou plusieurs des revendications 1 à 5, dans lequel les composants a), b), c), e), g) et éventuellement f) sont mélangés et ensuite broyés, et enfin le composant d) est ajouté.

7. Procédé de lutte contre une végétation indésirable, dans lequel une quantité efficace d'une dispersion aqueuse selon une ou plusieurs des revendications 1 à 5 est appliquée sur les plantes, des parties des plantes, les graines ou la surface sur laquelle les plantes poussent.

8. Utilisation d'une dispersion aqueuse selon une ou plusieurs des revendications 1 à 5, pour lutter contre une végétation indésirable.

9. Utilisation d'une dispersion aqueuse selon une ou plusieurs des revendications 1 à 5, pour fabriquer un agent herbicide.

10. Utilisation selon la revendication 9, dans laquelle l'agent herbicide est une suspension ou une suspoémulsion.

11. Agent herbicide liquide, pouvant être obtenu par dilution d'une dispersion aqueuse selon une ou plusieurs des revendications 1 à 5.

12. Agent herbicide liquide selon la revendication 11, dans lequel l'agent herbicide est une émulsion, une suspension, une suspoémulsion ou une solution.

13. Agent herbicide liquide selon l'une quelconque des revendications 11 et 12, contenant en outre :
f) un ou plusieurs agents actifs agrochimiques différents du composant a),
g) un ou plusieurs auxiliaires et additifs usuels supplémentaires.

14. Agent herbicide liquide selon la revendication 13, dans lequel l'agent actif agrochimique différent du composant a) est le diflufénican.

15. Procédé de lutte contre une végétation indésirable, dans lequel une quantité efficace d'un agent herbicide selon une ou plusieurs des revendications 11 à 14 est appliquée sur les plantes, des parties des plantes, les graines ou la surface sur laquelle les plantes poussent.

16. Utilisation d'un agent herbicide selon une ou plusieurs des revendications 11 à 14, pour lutter contre une végétation indésirable.

17. Utilisation d'un agent herbicide selon une ou plusieurs des revendications 11 à 14, pour lutter contre une végétation indésirable en prélevée et post-levée.
